# EUROPEAN PATENT APPLICATION

(11) **EP 1 541 031 A1**
(43) Date of publication of application: **15.06.2005**
(21) Application number: 03028383.2
(22) Date of filing: 10.12.2003
(51) Int. Cl.: A23B 9/24, A23L 1/00, A23K 1/16, A23B 7/153, A23B 7/154, A23B 4/10, A23B 4/20, A23L 1/212

(54) **Method for processing porous vegetal food products**

(71) Applicant: NESTEC S.A., 1800 Vevey (CH)
(72) Inventor: Erle, Ulrich, Feuerthalten (CH)
(74) Representative: Ravenel, Thierry Gérard Louis

(57) **Abstract**

The invention concerns a method for processing fresh porous vegetal food products, comprising the step of impregnating said food products with an edible gel forming solution, wherein the pores or interstices of said vegetal food product are filled with said solution. Preferably, the impregnation step is followed by a drying step allowing moisture level which insure a shelf stability.

The method is particularly suited for obtaining dry mushrooms having an appearance which is close to their appearance in the fresh state.

## Description

### FIELD OF THE INVENTION

The present invention concerns a method for processing raw or fresh porous vegetal food products. More particularly the invention concerns a method for processing raw or fresh porous vegetal food products to make them storable at room temperature. The method of the invention is particularly suitable for processing mushrooms. The invention also concerns the use of gel forming solution for impregnating porous vegetable material.

### BACKGROUND OF THE INVENTION

For practical reasons, such as handling, conditioning, or conservation time on the shelves in the shops, numerous vegetable food products are proposed in the form of dry products which can be mixed with a liquid, for example water, for reconstitution when used.

Various methods have been used in the past to prepare dry mushrooms. In one such prior known method, the mushrooms are simply sliced and air dried in a chamber in which air at a temperature of about 40°C circulates. Disadvantages of this method are that the volume of the mushrooms is greatly reduced, the aromas are reduced and their original shape is completely lost. In addition the consistency of the mushrooms tends to turn leathery after rehydration. It is also known that such air dried mushrooms rehydrate very slowly and never return to their original state.

It has thus been a matter of constant research by the industry to develop a technique which obviates the above described loss of volume, taste, aspect and texture of the mushrooms to give a product as close as possible to the original product in particular in shape and taste. The freeze-dry method applied to the mushrooms achieves these goals. According to this method, the mushrooms are first sliced, then frozen and while frozen are subjected to a very low pressure so that the water present in the mushrooms as ice, is removed by sublimation. Although the freeze-drying method have the advantages of producing food products that rehydrate readily and have a reduced loss in volume, this method require relatively complex and expensive installations increasing the cost price of these mushrooms. Yet another disadvantage of the freeze-drying method is that the freeze-dried mushrooms are brittle and delicate to handle.

### SUMMARY OF THE INVENTION

It is thus a main object of the invention to overcome the drawbacks of the aforementioned prior art by providing a method for processing fresh porous vegetal food products such as mushrooms, which allows to obtain food products having the qualities, in particular with regards to their appearance, shape, and texture as close as possible to these of freeze-dried product or fresh product respectively, before of after rehydration.

Another object of the invention is to provide such a method that reduces the loss of the aromas contained in the product.

Another object of the invention is to provide such a method which allows the food product to rehydrate easily, typically as quickly as freeze dried products.

Another object of the invention is to provide such a method which is cost effective and simple to implement.

Another object of the invention is to provide such a method that can be performed without using complex and expensive installations.

Yet another object of the invention is to provide a such method which allows to obtain food products which, after having been dried, are extremely stable on storage.

The invention therefore concerns a method for processing fresh porous vegetal food products, comprising the step of impregnating said food products with an edible gel forming solution, wherein the pores or interstices of said vegetal food product are filled with said solution.

Upon filling the pores or interstices of the product with the gel forming solution, one reinforces the material structure of the product thereby allowing the shape and the volume of the original product to be retained. By original product it is to be understood the product before its impregnation step.

In a preferred embodiment the gel forming solution is selected in the group of the particulate type gel solutions, preferably a polysaccharide or oligosaccharide solution. In addition, when the impregnated product is subjected to a further step of drying, the particulate gel forming solutions tend to shrink less than polymeric gel forming solutions thereby advantageously preserving a volume and shape closer to the original product.

Preferably the particulate gel forming solution used in the method of the invention is an inulin solution, the percentage of inulin in the gel forming solution being comprised between 15% and 40%, preferably between 20% and 35% and most preferably about 30%. One advantage of the use of inulin is that it fosters the gut health through a prebiotic effect as well as increases the bowel movement.

In another embodiment, the product after impregnation can be subjected to a drying step allowing moisture level which insure a shelf stability. The moisture level is advantageously brought to a level comprised between 2% and 10%. Owing to this additional drying step on can obtain a product extremely stable on storage while retaining its volume and shape.

In an advantageous variant of the invention the drying step comprises an air drying step followed by a microwave vacuum drying. The use of the microwave drying step is advantageous in that it causes the products to be dried to lightly swell, thereby reducing the volume reduction effect of the drying step.

Another advantage of the invention consist in being able to obtain products which are less brittle and less prone to abrasion than the freeze-dried products while still exhibiting a good crispiness. The products of the invention have thus good organoleptic properties.

The products prepared according to the method of the invention further includes the following advantages.

The method of the invention ensure a good protection against oxidation insofar the gel forming solution is in direct contact with the walls of pores or interstices and acts as a oxygen barrier.

The method of the invention allows the loss of aromas to be reduced as the gel forming solution as well as its dry end product provides a good diffusion barrier.

Once the dried product obtained by the method of the invention is rehydrated, it recovers a shape and a texture close to that of the original product.

The rehydration of the product obtained by the method of the invention is rapid.

The method of the invention can be implemented in an installation comprising relatively inexpensive equipments.

According to another aspect the invention also concerns food products made from fresh porous vegetal products comprising pores or interstices filled with an edible gel forming solution. When the food product is "fresh" i.e. they have not been dried after impregnation, it can easily be stored at cold temperatures typically around 5°C and keep its appearance, taste and shape for several days. On the other hand, when the food product has been subjected to a drying step after impregnation, the food product can be stored at room temperature indefinitely while retaining its original qualities in particular its appearance, shape, texture and taste.

According to yet another aspect the invention also concerns the use of an edible gel forming solution for impregnating a porous vegetable food product comprising a structure of pores or interstices filled with air and other gases, for reinforcing said structure of said product after the drying of said product.

Other objects and fuller understanding of the invention will be had by referring to the following description and claims of a preferred embodiment thereof.

### DESCRIPTION OF A PREFERRED EMBODIMENT OF THE INVENTION

Below the method for processing fresh porous vegetal food products according to the invention is explained more in detail.

The general idea of the invention consists in providing storable porous vegetable food products by impregnating said products, while they are in a fresh state, with an edible gel forming solution so as to avoid excessive shrinkage, in particular after dehydration, without using expensive conventional freeze-drying techniques.

The method of the invention is particularly suitable for processing mushrooms but is in no way limited to such products and can of course be applied to any vegetable food product having a structure made of pores or interstices that can be filled or impregnated by an edible gel forming solution. The porous vegetable food products will be prepared preferably sliced or diced before being subjected to the method of the invention according to their size or nature. In the case of mushrooms, they will be typically sliced or diced after having been washed in a known manner.

Gel forming solution means any aqueous solution that can form a gel with or without energy input or output, either alone or with addition of one or more cogeling agents. Energy input or output means exposing the gel forming solution to heat, cooling , UV radiation, ultrasound or microwave.

The gel forming solution is chosen from the group of ingredients that form particulate type gels since particulate gels have a good resistance to shrinkage after drying. Gel forming solutions such as polysaccharide or oligosaccharide solutions are particularly suited.

A gel forming solution containing inulin has given particularly good results. Inulin has the advantage of being economical and not affecting the organoleptic properties of the food product adversely. The concentration of inulin in the solution is chosen to be sufficient to form a gel at room temperature. Typically, the percentage of inulin in the gel forming solution is comprised between 15% and 40%, preferably between 20% and 35% and most preferably about 30% . It will be noted that the gel formation time depends on the concentration of the gel forming agent in the solution, the higher the concentration the lower the gel forming time. For example, at ambient temperature the gel formation time is of approximately 12 hours for a gel forming solution containing 20% of gelling agent, while the gel formation time is of approximately 30 minutes for a gel forming solution containing 30% of gelling agent. However, the time and the concentrations needed to form a gel may vary considerably with the inulin fraction used.

The impregnation of the food product can be made by any known manner. One impregnation method consists in dipping the food products into the gel forming solution and allowing the solution to penetrate slowly and continuously into the pores or interstices of the product and removing the products after the desired impregnation level has been obtained.

Another impregnation method consists in placing the food products in batches or continuously within a chamber or container together with the gel forming solution and subjecting the food products to a pressure sufficient to compress the gaseous volume fraction of the product thereby introducing the gel forming solution in the pores or interstices thereof. According to this method the pressure onto the product can be applied mechanically directly by physically compressing the product or alternatively by increasing the pressure present in a closed chamber. This method can be repeated several times on a same batch of product to achieve the desired impregnation level.

Yet another impregnation method can be envisaged. This method consists in placing the food products in batches or continuously within a chamber or container containing the gel forming solution and subjecting the food products to a vacuum sufficient to remove at least part of the air or other gases from the pores or interstices thereof and breaking the vacuum thereby filling the pores or interstices of said food products with the gel forming solution by suction. This method can also be repeated several times on a same batch of product to achieve the desired impregnation level.

After impregnation, the food products are preferably subjected to a step wherein the gel in the interior of the pores or interstices is formed. This step can be implemented with or without energy input or output as mentioned above according to the concentration of gelling agent in the solution. Typically the step consists in leaving the impregnated products for a time sufficient for the gel to form, this time being directly dependent on the concentration of the gelling agent used in the solution as well as the input or output of energy used during that step. Typically, during a drying step the concentration of the gelling agent increases thereby bringing the solution in gel forming ranges.

Once the gel is formed, the product can be used as such in a "semi fresh" state and kept for several days at a temperature of approximately 5°C before consumption.

If one desires to obtain a product which can be kept quasi indefinitely at room temperature, once the gel is formed, the product can be subjected to an additional drying step which allows a moisture level insuring shelf stability to be reached. The drying comprises an air drying step typically at a temperature of 30°C for a time sufficient to reach a first level of moisture in the food product. Typically this corresponds to a weight loss of approximately 40% to 60% This can be done for example in a conventional oven or air drier wherein air at a temperature of about 30°C circulates.

The air drying step is preferably continued by a microwave vacuum drying step wherein the food products are subjected to a microwave field of typically 0.5 to 5 watt per gram of product which further reduces the content of moisture in the food products rapidly while puffing them at the same time in the case of high microwave power.

If necessary, the products can be subjected to a final air drying step to remove the remaining moisture and achieve the desired moisture contents of the finished products.

These present finished products have a moisture contents ranging from about 2% to 10%. Such moisture content ensures shelf stability, i. e. allows microbial growth to be avoided when stored over extended periods. It is to be noted that such moisture content does not adversely affect the crispiness of the finished products.

The finished food products prepared according to the method of the invention can be used in various ways. For example, the food products can be consumed by themselves as snack items or after rehydration in food preparations such as soups, sauces, dehydrated meals or the like.

The present dried edible finished food products have a remarkable extended storage stability while maintaining the desirable texture, color and appearance.

These dried products can then be directly packaged into bags.

It goes without saying that the invention is not limited to that has just been described and that simple modifications and variants of the method can be envisaged without departing from the scope of the present invention defined in the appended claims.

## Claims

1. Method for processing fresh porous vegetal food products, comprising the step of impregnating said food products with an edible gel forming solution, wherein the pores or interstices of said vegetal food product are filled with said solution.

2. Method according to claim 1, wherein said gel forming solution is selected in the group of the particulate type gel solutions .

3. Method according to claim 1 or 2, wherein said gel forming solution is a polysaccharide or oligosaccharide solution.

4. Method according to claim 3, wherein said gel forming solution is an inulin solution.

5. Method according to claim 4, wherein the percentage of inulin in the gel forming solution is comprised between 15% and 40%, preferably between 20% and 35% and most preferably about 30%.

6. Method according to any of claims 1 to 4 further comprising, after said impregnation step, a drying step allowing moisture level which insure a shelf stability.

7. Method according to claim 6, wherein the moisture level is comprised between 2% and 10%.

8. Method according to claim 6 or 7, wherein the drying step comprises an air drying step followed by a microwave vacuum drying.

9. Method according to any of the preceding claims wherein the impregnation comprises the steps of:
(a) placing said food products within a container containing said gel forming solution;
(b) subjecting said food products to a vacuum sufficient to remove at least part of the air or other gases from the pores or interstices;
(c) breaking the vacuum thereby filling the pores or interstices of said food products.

10. Method according to claim 9, wherein said steps (b) and (c) are repeated several times.

11. Method according to claim 9 or 10, when it depends on claims 6 to 8, further comprising an induction step after step (c) and prior to the drying step.

12. Method according to any of the preceding claims, wherein said porous vegetal food products are fresh mushrooms, sliced, diced or in whole.

13. Food product made from a fresh porous vegetal product comprising pores or interstices filled with an edible gel forming solution.

14. Food product according to claim 13 wherein said gel forming solution is selected in the group of the particulate type gel solutions .

15. Food product according to claim 13 or 14, wherein said gel forming solution is a polysaccharide or oligosaccharide solution.

16. Food product according to claim 15, wherein said gel forming solution is an inulin solution.

17. Food product according to claim 16, wherein the percentage of inulin in the gel forming solution is comprised between 15% and 40%, preferably between 20% and 35% and most preferably about 30%.

18. Food product according to any of claims 13 to 17, wherein said porous vegetal food products are fresh mushrooms, sliced, diced or in whole.

19. Food product according to any of claims 13 to 18 conditioned in a dry state.

20. Use of an edible gel forming solution for impregnating a porous vegetable food product comprising a structure of pores or interstices filled with air other gases, for reinforcing said structure of said product after the drying of said product.

21. Use according to claim 20, wherein said gel forming solution is selected in the group of the particulate type gel solutions, preferably a polysaccharide or oligosaccharide solution and most preferably an inulin solution.
